# EUROPEAN PATENT APPLICATION

(11) **EP 1 323 628 A2**
(43) Date of publication of application: **02.07.2003**
(21) Application number: 02028635.7
(22) Date of filing: 20.12.2002
(51) Int. Cl.: B62M 27/02

(54) **Snow vehicle**

(30) Priority: 27.12.2001 JP 2001397417
(71) Applicant: YAMAHA HATSUDOKI KABUSHIKI KAISHA, Iwata-shi Shizuoka-ken (JP)
(72) Inventor: Nakano, Takuji, Yamaha Hatsudoki Kabushiki Kaisha, Iwata-shi, Shizuoka-ken (JP); Nishijima, Shinichi, Yamaha Hatsudoki Kabushiki K., Iwata-shi, Shizuoka-ken (JP)
(74) Representative: Grünecker, Kinkeldey, Stockmair & Schwanhäusser Anwaltssozietät

(57) **Abstract**

The invention relates to a snow vehicle. It aims to provide a cooling structure for such a snow vehicle to prevent a temperature rise.

This object is achieved by a snow vehicle comprising a body frame, an engine mounted on a front part of said body frame, and an exhaust unit connected to said engine, wherein a cooling passage is formed along said exhaust unit.

## Description

The invention relates to a snow vehicle which runs on snow, such as a snowmobile.

One typical snow vehicle is disclosed in JP-A-H02-293293. In the snow vehicle disclosed in the publication, an engine is mounted in an engine room in a front part of the vehicle body and an exhaust pipe connected to the rear wall of the engine is directed toward the front of the vehicle, and an exhaust silencer is disposed in the engine room. Namely, the entire exhaust system is disposed in the engine room.

In the conventional snow vehicle, since the engine is mounted in the engine room in a front part of the vehicle and the entire exhaust system is also disposed in the engine room, the front part of the vehicle has a large weight. This tends to make the steering handle heavy and imposes a limitation on improvement of steering properties.

In the snow vehicle according to the above, it has been further found problematic that the exhaust pipe can cause an unwanted temperature rise in the snowmobile.

The invention has been made in view of the above circumstances and it is, therefore, an object of the invention to provide a structure for a snow vehicle which can prevent such a temperature rise.

For a snow vehicle, this object has been solved in an inventive manner by a snow vehicle comprising a body frame, an engine mounted on a front part of said body frame, and an exhaust unit connected to said engine, wherein a cooling passage is formed along said exhaust unit.

Preferably, such a snow vehicle comprises an exhaust pipe connected to the rear wall of an engine being extended to the rear of the vehicle to reduce the weight of the front part of the vehicle. Thereby, the snow vehicle can have improved steering properties.

In the snow vehicle according to the above development, the exhaust pipe extends right under a floor panel.

Moreover, there is provided a cooling structure for a snow vehicle which can discharge heat from an exhaust pipe to the rear of the vehicle with a simple structure and which can prevent a temperature rise around a floor panel.

Preferably, such a snow vehicle having a body frame and an engine mounted on a front part of the body frame further comprises an exhaust unit connected to the engine and extending to the rear of the vehicle under a floor panel, and a saddle type seat mounted on the floor panel, the cooling structure being for preventing a temperature rise around the exhaust unit, wherein a cooling passage for passing running wind from the vicinity of the mounting position of the engine toward the rear of the vehicle is formed along the exhaust unit.

Therein, at least part of the cooling passage is constituted by gaps between a bottom plate of the seat and the floor panel.

In a preferred embodiment, the snow vehicle comprises a cooling structure, wherein said cooling passage is constituted by a pair of right and left tunnel-like passages formed by engagement of an upwardly bulging and downwardly opening seat side recessed groove which is formed by said seat bottom plate with an upwardly bulging and downwardly opening floor side recessed groove formed by said floor panel and having a smaller width than said seat side recessed groove, and wherein said exhaust unit is arranged to extend right under said floor side recessed groove.

Further, preferably part of the cooling passage is constituted by gaps between a fuel tank disposed on the floor panel in front of the seat and the floor panel.

Moreover, said cooling passage is constituted by a pair of right and left tunnel-like passages formed by engagement of an upwardly bulging and downwardly opening tank side recessed groove formed on a bottom wall of said fuel tank with an upwardly bulging and downwardly opening floor side recessed groove formed by said floor panel and having a smaller width than said tank seat side recessed groove, and wherein said exhaust unit is arranged to extend right under said floor side recessed groove.

According to a further aspect of the invention, part of the cooling passage is constituted by a gap formed between an exhaust muffler connected to the rear end of the exhaust unit and the seat bottom plate covering the exhaust muffler from above, and wherein heat-resistant cushioning materials are interposed between the exhaust muffler and the seat bottom plate.

Therein, the cooling passage is so shaped that the passage area at the rear side is greater than that at the front side.

Since the exhaust unit is extended from the engine to the rear of the vehicle, and the cooling passage for passing running wind from the vicinity of the mounting position of the engine toward the rear of the vehicle is formed along the exhaust unit, the running wind can be easily passed along the exhaust unit to prevent a temperature rise around the exhaust unit.

Accordingly, because at least part of the cooling passage is constituted by gaps between the bottom plate of the seat and the floor panel, the cooling passage can be accomplished without providing a special space for that and without complicating the structure.

According to an aspect of the invention, a constitution which can realize the cooling passage more concretely can be provided. Namely, the upwardly bulging and downwardly opening seat side recessed groove which is formed by the seat bottom plate is attached in the upwardly bulging and downwardly opening floor side recessed groove which is formed by the floor panel and which has a smaller width than the seat side recessed groove, so that a pair of right and left tunnel-like passages are formed between the floor side recessed groove and the seat side recessed groove.

Also, the exhaust unit is arranged to extend right under the floor side recessed groove. Therefore, the exhaust unit can be disposed using the recessed groove and thus can be made compact.

According to another aspect of the invention, part of the cooling unit is constituted by the gaps between the fuel tank disposed on the floor panel in front of the seat and the floor panel. Thus, the cooling passage can be accomplished without providing a special space for that and without complicating the structure.

Accordingly, a constitution which can realize the cooling passage more concretely can be provided. Namely, the floor side recessed groove which is formed by the floor panel is attached in the tank side recessed groove which is formed on the bottom wall of the fuel tank, so that a pair of right and left tunnel-like passage can be formed between the floor side recessed groove and the tank side recessed groove.

According to still another aspect of the invention, part of the cooling passage is constituted by a gap formed between the exhaust muffler connected to the rear end of the exhaust unit and the bottom plate of the seat covering the exhaust muffler from above. Thus, the cooling passage can be accomplished with a simple structure. Also, heat-resistant cushioning members are interposed between the exhaust muffler and the bottom plate of the seat. Thus, even when somebody sits on a part of the seat above the muffler, the area of the cooling passage is not decreased.

Preferably, the cooling passage is so shaped that the passage area at the rear side is greater than that at the front side. Thus, the flow resistance to the running wind can be reduced to secure a flow of the running wind.

Further preferred embodiments of the invention are subject to the subclaims.

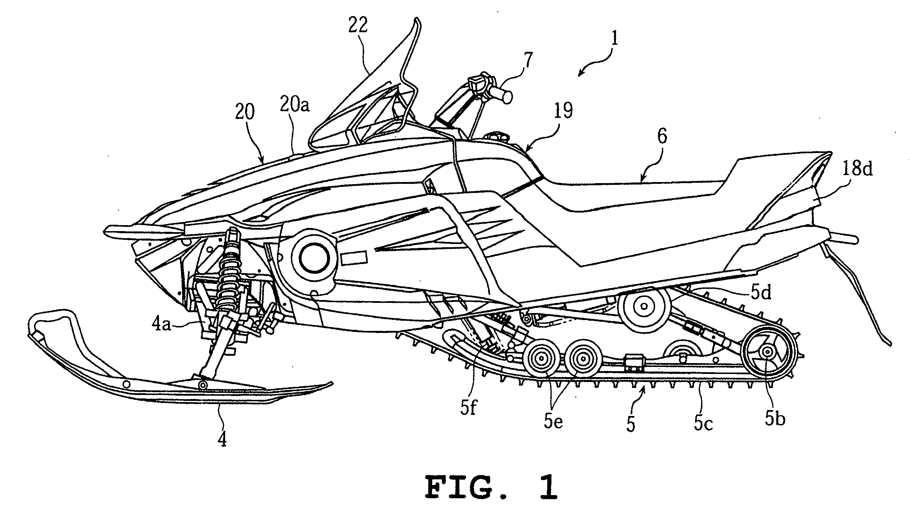

In the following, a detailed description will be made of the embodiments of the present invention with reference to accompanying drawings; wherein
- FIG. 1: is a left side view of a snow vehicle provided with a cooling structure according to a preferred embodiment of the present invention;
- FIG. 2: is a plan view of the snow vehicle;
- FIG. 3: is a front view of the snow vehicle;
- FIG. 4: is a schematic view illustrating the cooling structure in the snow vehicle;
- FIG. 5: is a perspective view of a body frame and an exhaust unit of the snow vehicle;
- FIG. 6: is a perspective view of the body frame of the snow vehicle;
- FIG. 7: is an exploded perspective view of the body frame;
- FIG. 8: is a cross-sectional front view (a cross sectional view taken along the line VIII-VIII in FIG. 4) illustrating the cooling structure;
- FIG. 9: is a cross-sectional front view (a cross sectional view taken along the line IX-IX in FIG. 4) illustrating the cooling structure;
- FIG. 10: is a cross-sectional front view (a cross sectional view taken along the line X-X in FIG. 4) illustrating the cooling structure;
- FIG. 11: is a cross-sectional front view (a cross sectional view taken along the line XI-XI in FIG. 12) illustrating the cooling structure; and
- FIG. 12: is a cross-sectional side view illustrating the cooling structure.

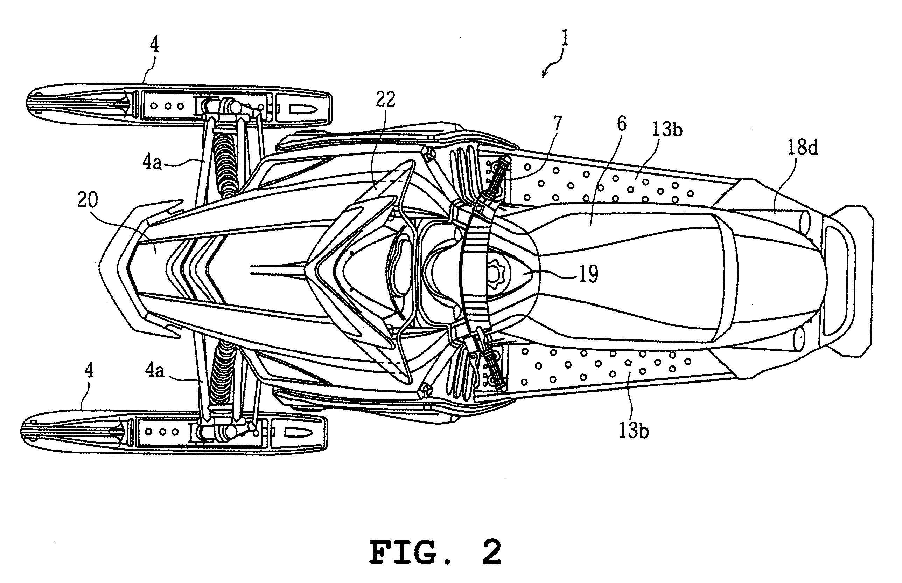

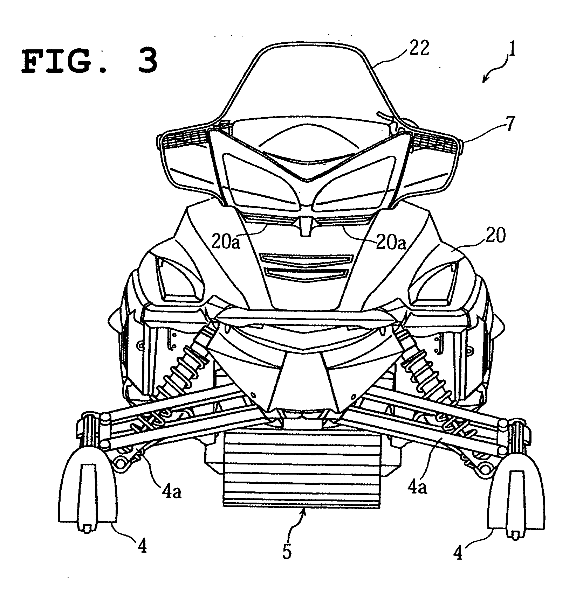

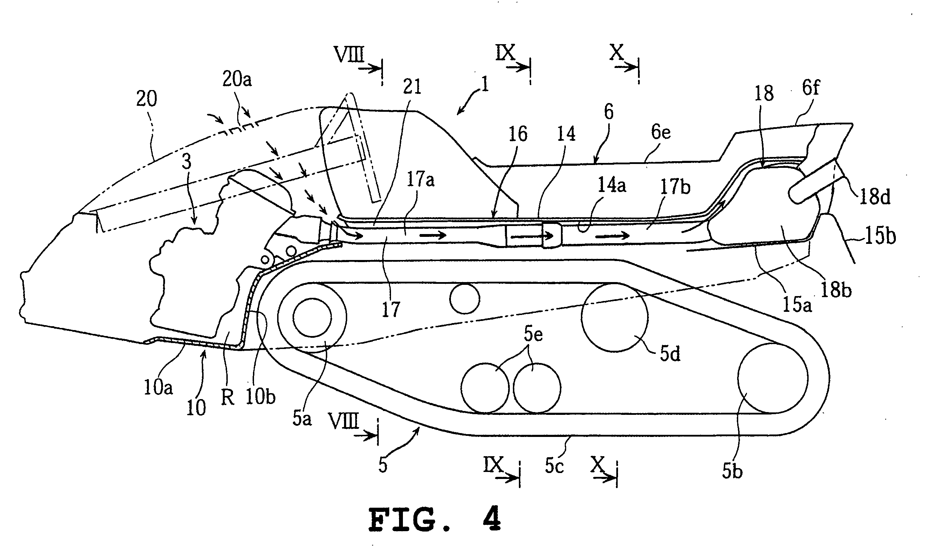

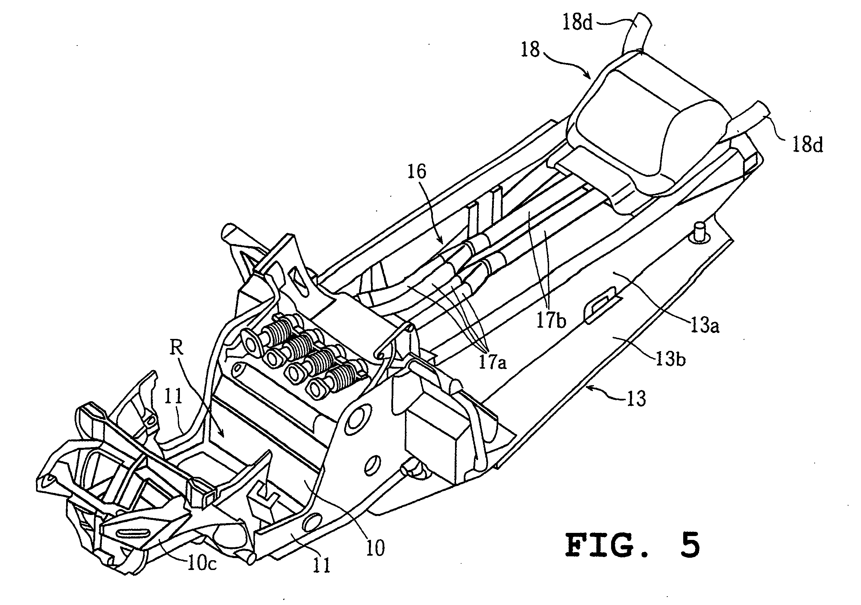

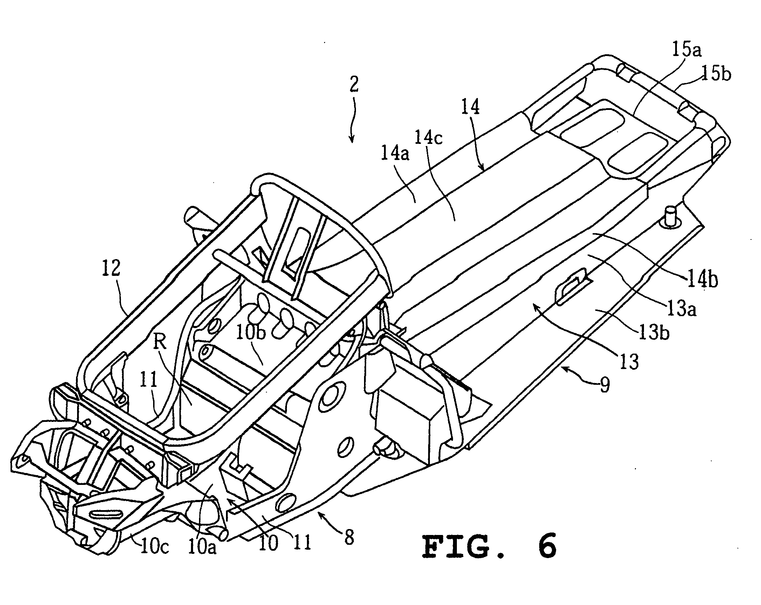

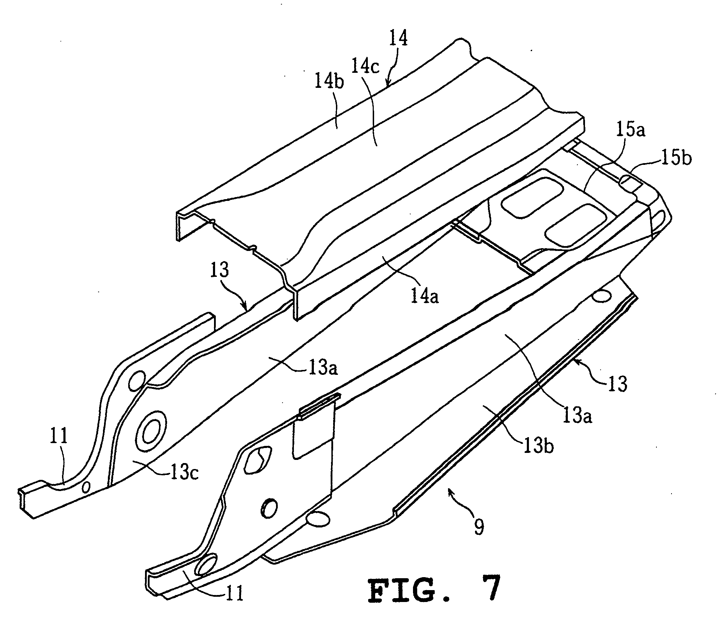

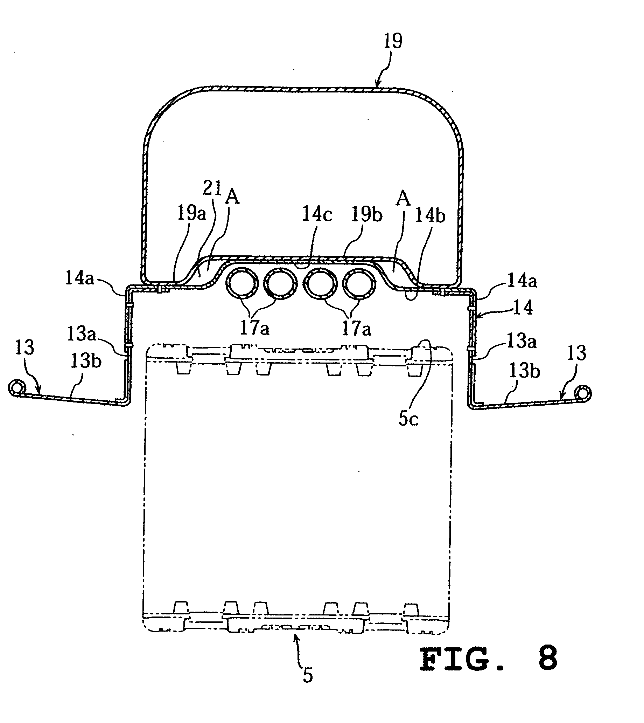

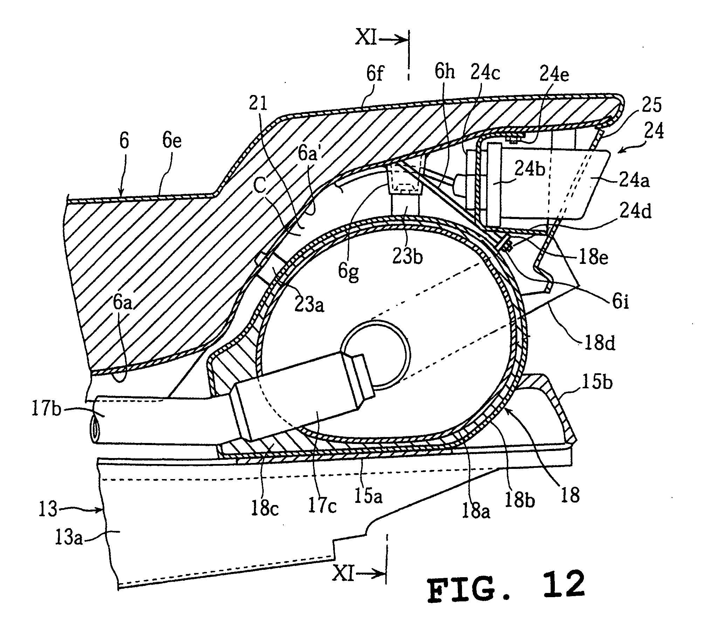

FIG. I to FIG. 12 are drawings for explaining in more detail a preferred embodiment of the present invention of a snow vehicle comprising a cooling structure: FIG. I, FIG. 2 and FIG. 3 are a left side view, a plan view and a front view, respectively, of the snow vehicle, FIG. 4 is a left side view of an exhaust unit, FIG. 5 is a perspective view of a body frame and the exhaust unit, FIG. 6 is a perspective view of the body frame, FIG. 7 is an exploded perspective view of the body frame, FIG. 8, FIG. 9, FIG. 10 and FIG. 11 are cross-sectional front views (illustrating the cooling structure), and FIG. 12 is a cross-sectional side view of a part of an exhaust muffler.

In the drawings, designated as 1 is a snow vehicle provided with the structure according to this embodiment. In the snow vehicle 1, an engine 3 is mounted in an engine room R formed at a front part of a body frame 2. On both sides of the engine room R, a pair of right and left skis 4 and 4 are disposed through front suspensions 4a and 4a for vertical swinging movement and lateral steering movement. A driving track 5 is disposed under the rear half part of the body frame 2 through a rear suspension for vertical swinging movement. A saddle type seat 6 is mounted on an upper rear part of the body frame 2. A fuel tank 19 and a steering handle 7 are arranged in front of the seat 6. A windshield 22 for blocking running wind is disposed in front of the steering handle 7. The periphery of the engine room R and both sides of the seat 6 are covered with a body cover 20.

The snow vehicle 1 can freely run on snow by rotating the track 5 with the engine 3 and turning the steering skis 4 and 4 right and left with the steering handle 7.

The body frame 2 comprises a front frame 8 which constitutes about the front one third of the body flame 2 and a rear frame 9 which constitutes the other two thirds thereof. The front frame 8 comprises a bottom panel 10 having a front bottom wall 10a, a front end member 10c secured to the front end of the front bottom wall 10a, and a rear bottom wall 10b rising from the rear end of the front bottom wall 10a and extending rearward; right and left panels 11 and 11 rising from the right and left ends of the bottom panel 10; and a rectangular frame body 12 disposed above the right and left panels 11 and 11 and the bottom panel 10. A space defined by the bottom panel 10, right and left panels 11 and 11 and the frame body 12 is the engine room R.

The rear frame 9 has a generally hat-like transverse cross-section and comprises a steel upper panel 14 and a pair of right and left steel panels 13 and 13 joined on both sides of the upper panel 14 with rivets. In this embodiment, the upper panel 14 constitutes a floor panel in the present invention. The upper panel 14 and the right and left panels 13 and 13 may be integrally formed or may be made of a material other than steel plate such as a resin.

The right and left panels 13 extend from the rear ends of the rear frame 9 to positions where they overlap the right and left panels 11 of the front frame 8. The extending ends 13c of the right and left panels 13 are joined to the right and left panels 11, respectively. The right and left panels 13 have an L-shaped cross-section, and has vertical portions 13a in the approximate L-shape which constitute side walls of the rear frame 9 and the horizontal portions 13b which constitute foot rests. The rear ends of the right and left panels 13 and 13 are connected by connecting brackets 15b. The front ends of the connecting brackets 15b are connected by a support plate 15a for supporting a hereinafter described muffler 18.

The upper panel 14 has a U-shaped cross-section and has a length extending from the vicinity of the front end of the support plate 15a to the vicinity of the rear ends of the right and left panels 11 and 11 of the front frame 8. The upper panel 14 has vertical portions 14a and 14a joined to the vertical portions 13a of the right and left panels 13 with rivets. The lateral center part of a horizontal portion 14b is bulged upward to form a floor side recessed groove 14c which opens downward and extends along the entire length of the upper panel 14 .

The driving track 5 comprises a front pulley 5a, a rear pulley 5b and a wide track belt 5c trained around the front and rear pulleys 5a and 5b, and is of generally parallelogram in a side view. The driving track 5 is supported for vertical swinging movement about the driving shaft of the front pulley 5a disposed in the vicinity of the boundary of the front frame 8 and the rear frame 9. Designated as 5d and 5e are guide pulleys for maintaining the track belt 5c in the parallelogram.

The engine 3, which is a water-cooled, four-cycle in-line four-cylinder type, is disposed in the engine room R with its crank shaft extending in a width direction of the vehicle and supported by the front frame 8 through an engine mount made of an elastic material.

The engine 3 has a rear wall to which an exhaust unit 16 is connected. The exhaust unit 16 comprises four exhaust pipes 17a connected to exhaust ports for each cylinder which open in the rear wall of the engine 3, two collecting pipes 17b and 17b to each of which two exhaust pipes 17a are connected, and an exhaust muffler 18 connected to the downstream ends of the collecting pipes 17b and 17b.

The exhaust muffler 18 comprises a muffler main 18a which is made of a steel plate and into which the downstream ends 17c of the collecting pipes 17b are inserted and open and a cover plate 18b made of steel and surrounding the muffler main 18a with a specified gap therebetween. An insulating material 18c is filled in the gap between the muffler main 18a and the cover plate 18b. The muffler main 18a has right and left sides to which tail pipes 18d are respectively connected. The tail pipes 18d and 18d are protruded to the outside of the vehicle body from under a rear part of the seat 6 and extend obliquely upward.

The exhaust unit 16 is disposed between the upper panel 14 of the rear frame 9 and the driving track 5. Especially, the four exhaust pipes 17a and the two collecting pipes 17b are disposed right under the floor side recessed groove 14c of the upper panel 14 so as to be partially received in the floor side recessed groove 14c, and extend backward.

In this embodiment, a cooling passage 21 for passing running wind from the vicinity of the mounting position of the engine 3 toward the rear of the vehicle is formed along the exhaust pipes 17a, the collecting pipes 17b and the exhaust muffler 18 of the exhaust unit 16. The cooling passage 21 is formed between bottom walls of the fuel tank 19 and the seat 6 and the upper panel 14 of the rear frame 9, and between the bottom wall of the seat 6 and the exhaust muffler 18, and has the following constitution.

Firstly, the cooling passage in the vicinity of the fuel tank 19 mounted in front of the seat 6 will be described with reference mainly to FIG. 8. The fuel tank 19 has a bottom wall 19a, and the lateral center part of the bottom wall 19a is bulged upward to form a tank side recessed groove 19b which opens downward and extends along the entire length of the fuel tank 19. When the fuel tank 19 is mounted on the upper panel 14, the bottom wall 19a of the fuel tank 19 including the tank side recessed groove 19b abuts on the horizontal portions 14b and the floor side recessed groove 14c of the upper panel 14. The floor side recessed groove 14c has a smaller width than the tank side recessed groove 19b, so that a pair of right and left tunnel-like passages A and A are formed by the floor side recessed groove 14c and the tank side recessed groove 19b. The tunnel-like passages A and A constitute the front part of the cooling passage 21.

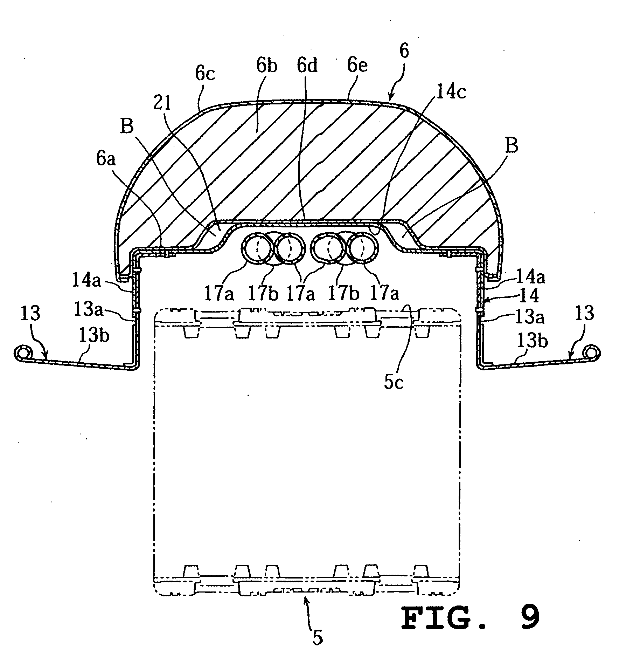

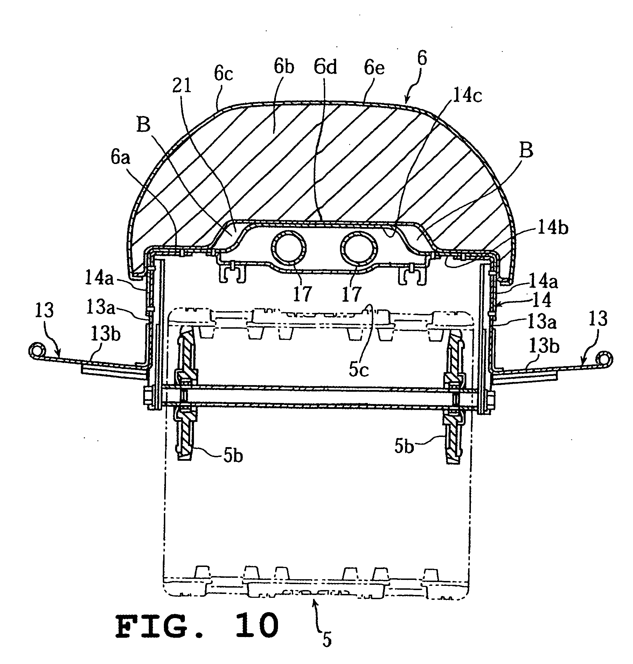

The cooling passage in the vicinity of the seat 6 will be described with reference mainly to FIG. 9 and FIG. 10. The seat 6 comprises a seat bottom plate 6a and a cushion material 6b mounted on the seat bottom plate 6a and firmly attached thereto with an adhesive, and a cover cloth 6c covering the cushion material 6b. The seat 6 had an effective sitting part 6e which is formed to provide a cushioning property when a rider sits thereon and an ornamental part 6f which is one step higher than the effective sitting part 6e. The lateral center part of the seat bottom plate 6a is bulged upward to form a seat side recessed groove 6d which opens downward and extends along the entire length of the effective sitting part 6e of the seat 6.

When the seat 6 is mounted on the upper panel 14, the seat bottom plate 6a including the seat side recessed groove 6d abuts on the horizontal portions 14b and the floor side recessed groove 14c of the upper panel 14. The floor side recessed groove 14c has a smaller width than the seat side recessed groove 6d, so that a pair of right and left tunnel-like passages B and B are formed by the seat side recessed groove 6d and the floor side recessed groove 14c. The tunnel-like passages B and B constitute the longitudinal middle part of the cooling passage 21.

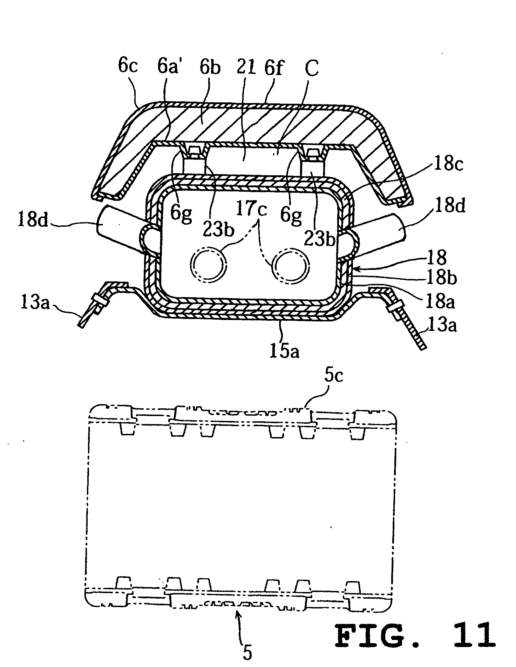

The cooling passage in the vicinity of the exhaust muffler 18 will be described with reference mainly to FIG. 11 and FIG. 12. The exhaust muffler 18 is a large type having a generally gourd shape in a cross-section taken along a vertical plane including the longitudinal center line of the vehicle and having a width which is about a half of that of the vehicle. The seat bottom plate 6a has a portion 6a' covering the exhaust muffler 18 from above and extending upward and rearward so that a specified space may be formed between itself and the cover plate 18b of the exhaust muffler 18. Heat-resistant dumper members (cushioning members) 23a and 23b are provided on the right and left of a front part and on the right and left of a rear part, respectively, of the seat bottom plate 6a' to secure the above space. Thereby, a collecting passage C having a width corresponding to that of the seat 6 is formed between the seat bottom plate 6a' and the cover plate 18b of the exhaust muffler 18. The collecting passage C constitutes the rear part of the cooling passage 21.

The front right and left damper members 23a are detachably attached directly to the seat bottom plate 6a', and the rear right and left damper members 23b are detachably attached to support bosses 6g protruded downward from the seat bottom plate 6a'.

Two lock bolts 6h are secured to the seat bottom plate 6a' in the vicinity of the support bosses 6g and extend downward and rearward. The lock bolts 6h are inserted through securing holes in a bracket 18e secured to the cover plate 18b of the exhaust muffler 18 and clamped to the bracket 18e with lock nuts 6i, whereby the rear part of the seat 6 is secured to the body frame.

A tail lamp unit 24 is disposed between the rear end of the seat 6 and the exhaust muffler 18. The tail lamp unit 24 comprises a lens main 24a and a base member 24b for supporting the lens main 24a. The base member 24b is supported by a tail bracket 24d through a damper member 24c. The lens main 24a is protruded rearward through a hole formed in a tail cover 25 disposed to cover a part above the exhaust muffler 18 on the rear side of the vehicle. The tail bracket 24d is secured to a lower surface of the seat bottom plate 6a' with a holt 24e.

The tunnel-like passages A and A constituting the cooling passage 21 are communicated to the tunnel-like passages B and B, respectively, and the tunnel-like passages B and B open into the collecting passage C. Each of the tunnel-like passages A and B is so shaped that the passage area gradually increases toward the rear.

When the snow vehicle 1 according to this embodiment starts running, running wind is introduced through outside air inlets 20a formed in the vicinity of the front of the windshield 22 on the body cover 20 and flows toward the rear of the vehicle through the right and left tunnel-like passages A and A and B and B, and the collecting passage C constituting the cooling air passage 21.

According to this embodiment, the exhaust unit 16 is extended from the engine 3 to the rear of the vehicle, and the cooling passage 21 for passing running wind from the vicinity of the mounting position of the engine 3 toward the rear of the vehicle is formed along the exhaust unit 16. Thus, running wind can be easily passed along the exhaust unit 16 to prevent a temperature rise around the exhaust unit 16.

The cooling passage 21 along the exhaust unit 16 is formed utilizing gaps between bottom walls of the fuel tank 19 and the seat 6 and the upper panel 14 as a floor panel, and a gap between the bottom place of the seat 6 and the muffler 18, so that the cooling passage 21 for passing running wind along the exhaust unit 16 can be accomplished without forming a special space for that or complicating the structure.

More specifically, the cooling passage 21 is constituted by the gaps as the tunnel-like passages A and A formed by attaching the floor side recessed groove 14c formed with the upper panel 14 in the tank side recessed groove 19b formed with the bottom wall 19a of the fuel tank 19, the gaps as the tunnel-like passages B and B formed by attaching the floor side recessed groove 14c in the seat side recessed groove 6d formed with the seat bottom plate 6a, and the space as the collecting passage C formed by providing a space between the seat bottom plate 6a' and the muffler 18. Thus, the cooling passage 21 for passing running wind along the exhaust unit 16 can be accomplished without forming a special space for that or complicating the structure.

Also, heat-resistant damper members 23a and 23b are interposed between the exhaust muffler 18 and the seat bottom plate 6a', so that even when somebody sits on the ornamental part 6f of the seat 6, the area of the cooling passage is not decreased.

Also in this embodiment, each of the tunnel-like passages A and B and the collecting passage C is so shaped that the passage area gradually increases toward the rear, so that the flow resistance to the running wind can be reduced to secure a flow of the running wind.

It is only necessary that the cooling passage is constituted to pass running wind along the exhaust unit to cool it. Thus, the present invention is not limited to the case where the tunnel-like passages are affirmatively formed between fuel tank and the floor panel and between the seat and the floor panel. For example, a space between the rear frame 9 serving as a floor panel and the driving track 5 also functions as a cooling passage for passing running wind along the exhaust unit, so that this space is also included in the cooling passage of the present invention.

In the above embodiment, an example in which running wind is passed as it is along the exhaust unit is described. However, an air fan may be provided downstream of the air inlets 20a so that running wind can be forcibly introduced. In this case, the temperature rise around the exhaust unit can be prevented more securely.

As described before, in order to provide a cooling structure for a snow vehicle which can discharge heat from an exhaust pipe to the rear of the vehicle to prevent a temperature rise around a floor panel with a simple structure, it is proposed that a snow vehicle, in particular a snow mobile, comprises a cooling structure, the snow vehicle 1 having a body frame 2, an engine 3 mounted on a front part of the body frame 2, an exhaust unit 16 connected to the engine 3 and extending to the rear of the vehicle under a floor panel 14, and a saddle type seat 6 mounted on the floor panel 14, the cooling structure being for preventing a temperature rise around the exhaust unit 16. A cooling passage 21 for passing running wind from the vicinity of the mounting position of the engine 3 toward the rear of the vehicle is formed along the exhaust unit 16.

As stated above, the invention relates to a snow vehicle which runs on snow, such as a snow mobile. It aims to provide a cooling structure for such a snow vehicle to prevent a temperature rise.

This object is achieved by a snow vehicle comprising a body frame 2, an engine 3 mounted on a front part of said body frame 2, and an exhaust unit 16 connected to said engine 3, wherein a cooling passage 21 is formed along said exhaust unit.

## Claims

1. Snow vehicle comprising a body frame (2), an engine (3) mounted on a front part of said body frame (2), and an exhaust unit (16) connected to said engine (3), wherein a cooling passage (21) is formed along said exhaust unit (16).

2. Snow vehicle according to claim 1, **characterized in that** said exhaust unit (16) extends to the rear of said snow vehicle (1).

3. Snow vehicle according to claim 1 or 2, **characterized in that** said exhaust unit (16) extends under a floor panel (14), wherein a saddle type seat (6) is mounted on said floor panel (14).

4. Snow vehicle according to one of the claims 1 to 3, **characterized in that** said cooling passage (21) is capable of passing running wind from the vicinity of a mounting position of said engine (3) toward the rear of said snow vehicle (1).

5. Snow vehicle according to one of the claims 1 to 4, **characterized in that** at least part of said cooling passage (21) is constituted by gaps between a bottom plate (6a) of said seat (6) and a floor panel (14).

6. Snow vehicle according to one of the claims 1 to 5, **characterized in that** said at least part of said cooling passage (21) is constituted by a pair of right and left tunnel-like passages (B,B) formed by engagement of an upwardly bulging and downwardly opening seat side recessed groove (6b) which is formed by a bottom plate (6a) with an upwardly bulging and downwardly opening floor side recessed groove (16c) formed by said floor panel (14) and having a smaller width than said seat side recessed groove (6a).

7. Snow vehicle according to one of the claims 1 to 6, **characterized in that** said exhaust unit (16) is arranged to extend right under said floor side recessed groove (14c).

8. Snow vehicle according to one of the claims 1 to 7, **characterized in that** part of said cooling passage (21) is constituted by gaps between a fuel tank (19) disposed on said floor panel (14) in front of said seat (6) and said floor panel (14).

9. Snow vehicle according to one of the claims 1 to 8, **characterized in that** said cooling passage (21) is constituted by a pair of right and left tunnel-like passages (A,A) formed by engagement of an upwardly bulging and downwardly opening tank side recessed groove (19b) formed on a bottom wall (19a) of said fuel tank (19) with an upwardly bulging and downwardly opening floor side recessed groove (14c) formed by said floor panel (14) and having a smaller width than said tank seat side recessed groove (19b).

10. Snow vehicle according to one of the claims 1 to 9, **characterized in that** part of said cooling passage (21) is constituted by a gap (C) formed between an exhaust muffler (18) connected to the rear end of said exhaust unit (16) and said seat bottom plate (6a') covering said exhaust muffler (18) from above, and wherein heat-resistant cushioning materials (23a,23b) are interposed between said exhaust muffler (18) and said seat bottom plate (6a').

11. Snow vehicle according to one of the claims 1 to 10, **characterized in that** said cooling passage (21) is so shaped that the passage area at the rear side is greater than that at the front side.
